# EUROPEAN PATENT APPLICATION

(11) **EP 2 487 775 A1**
(43) Date of publication of application: **15.08.2012**
(21) Application number: 10821876.9
(22) Date of filing: 17.09.2010
(51) Int. Cl.: H02J 7/34, G06F 1/26, H01M 10/44

(54) **MOBILE TERMINAL DEVICE, POWER SUPPLY SYSTEM, AND POWER SUPPLY METHOD AND POWER SUPPLY PROGRAM FOR MOBILE TERMINAL DEVICE**

(30) Priority: 08.10.2009 JP 2009234112
(71) Applicant: NEC Corporation, Tokyo 108-8001 (JP)
(72) Inventor: MIZUSAWA, Kouji, Tokyo 108-8001 (JP)
(74) Representative: Vossius & Partner
(86) International application number: PCT/JP2010/066630
(87) International publication number: WO 2011/043205

(57) **Abstract**

Portable terminal equipment capable of operating for a long time is provided. Portable terminal equipment of the present invention includes: a plurality of circuits separated galvanically and a power supply switching switch which switches power supply to the plurality of circuits between power supply from a USB (Universal Serial Bus) and power supply from a battery for each of respective circuits included in the plurality of circuits.

## Description

### Technical field

The present invention relates to portable terminal equipment, a power supply system, and a power supply method and a power supply program for portable terminal equipment; and in particular, relates to portable terminal equipment, a power supply system, and a power supply method and a power supply program for portable terminal equipment which receive power supply from host equipment.

### Background art

In a market of recent portable terminal equipment, with an advent of multimeditization, speeding up of CPU (Central Processing Unit) and speeding up of data transmission rate are aimed at and power consumption of the portable terminal equipment is increasing steadily. Therefore, various portable terminal equipment which receives power supply from host equipment is proposed (for example, refer to patent documents 1 to 6).

Portable terminal equipment described in patent documents 1, 3, 4 and 6 operates as follows. Host equipment and portable terminal equipment adjust current consumption for the portable terminal equipment according to a power supply capability of the host equipment or power consumption of the portable terminal equipment.

Portable terminal equipment described in patent document 2 is a digital camera and operates as follows. When the digital camera and a PC are connected via a USB (Universal Serial Bus) interface, amount of electric power which can be supplied from the PC is confirmed, and power is supplied from the PC based on the confirmation result. The digital camera supplies electricity to all or a part of function blocks which can be driven according to the amount of electric power which can be supplied. As a result, the supply power from the PC is utilized.

Portable terminal equipment described in patent document 5 is a digital camera and operates as follows. The digital camera is divided into a first block which can operate by power supply from a USB interface and a second block which cannot operate by power supply from the USB interface. Also, the digital camera includes: a mode which operates by electric power supplied from a battery, a mode which operates only by electric power supplied from a USB cable USB power supply and a mode which charges the battery. And, a PC judges in which mode the digital camera is and controls supply of electric power to the digital camera.

On the other hand, a technology to correspond to a time of transient power outage is proposed (for example, refer to patent documents 7 and 8). A power supply circuit described in patent document 7 includes a power supply, DC-DC converter and a capacitor and operates as follows. A plurality of capacitors inserted in an input unit of the DC-DC converter guards so that input voltage of the DC-DC converter will not be cut off in case there occurs transient power outage, and prevents influences to a load.

Display equipment described in patent document 8 includes a hub port and a host power supply and operates as follows. Even if the power supply by a power supply unit in the display equipment is cut off, a USB device is made to operate by the host power supply which is provided through the hub port connected to the host.

### Preceding technical literature

### Patent documents

Patent document 1: WO 2005/022369
Patent document 2: Japanese Patent Application Laid-Open No. 2001-100868
Patent document 3: Japanese Patent Application Laid-Open No. 2004-056877
Patent document 4: Japanese Patent Application Laid-Open No. 2004-171558
Patent document 5: Japanese Patent Application Laid-Open No. 2005-173822
Patent document 6: Japanese Patent Application Laid-Open No. 2009-060717
Patent document 7: Japanese Patent Application Laid-Open No. 1994-030524
Patent document 8: Japanese Patent Application Laid-Open No. 1998-097352

### Summary of the invention

### Problems to be solved by the invention

When power consumption for portable terminal equipment increases, the following will become a problem.

The problem is, same as the portable terminal equipment described in patent documents 1, 3, 4 and 6, usable time of the portable terminal equipment becomes shorter because, in addition to usual power consumption, it also consumes electric power for a circuit which is related to USB communication.

Accordingly, the present invention makes it an object to provide portable terminal equipment, a power supply system, and a power supply method and a power supply program for portable terminal equipment which solves the first, the second and the third problem mentioned above.

### Solution to Problem

Portable terminal equipment of the present invention includes: a plurality of circuits separated in direct current and a power supply switching switch which switches power supply to the plurality of circuits between power supply from a USB (Universal Serial Bus) and power supply from a battery for each of respective circuits included in the plurality of circuits.

Also, a power supply system of the present invention includes portable terminal equipment according to the present invention, host equipment including a USB and a battery.

Also, a power supply method for portable terminal equipment of the present invention includes a power supply switching procedure which switches power supply to a plurality of circuits separated in direct current between power supply from a USB (Universal Serial Bus) and power supply from a battery for each off respective circuits included in the plurality of circuits.

Also, a power supply program for portable terminal equipment of the present invention makes a computer execute a power supply switching step which switches power supply to a plurality of circuits separated in direct current between power supply from a USB (Universal Serial Bus) and power supply from a battery for each of respective circuits included in the plurality of circuits.

### Effect of the invention

According to the present invention, portable terminal equipment, a power supply system, and a power supply method and a power supply program for portable terminal equipment which solve the first, the second and the third problem mentioned above can be provided.

### Grief description of the drawings

Fig. 1 indicates an exemplary configuration of a power supply system according to the exemplary embodiment 1.
Fig. 2 indicates an example of a portable terminal method according to the exemplary embodiment 1.
Fig. 3 indicates an example of a portable terminal program according to the exemplary embodiment 1.
Fig. 4 indicates a first example of portable terminal equipment according to the exemplary embodiment 2.
Fig. 5 indicates a second example of portable terminal equipment according to the exemplary embodiment 2.
Fig. 6 indicates a third example of portable terminal equipment according to the exemplary embodiment 2.
Fig. 7 indicates an exemplary configuration of a power supply switching switch.
Fig. 8 indicates an example of operation of portable terminal equipment according to the exemplary embodiment.
Fig. 9 indicates: (a) time series variation of voltage applied at VBUS terminal voltage, (b) time series variation of electric current Iusb1, (c) time series variation of ON resistance of a switch for battery, (d) time series variation of electric current Ibat1, and (e) time series variation of electric current Isys1; when a USB cable is pulled out.

### Description of Embodiments

An exemplary embodiment of the present invention will be described with reference to attached drawings. The exemplary embodiment described below is an example of the present invention, and the present invention is not restricted to the following exemplary embodiment. Further, in the specification and drawings, it is supposed that components whose codes are same indicate identical one mutually.

### (Exemplary embodiment 1)

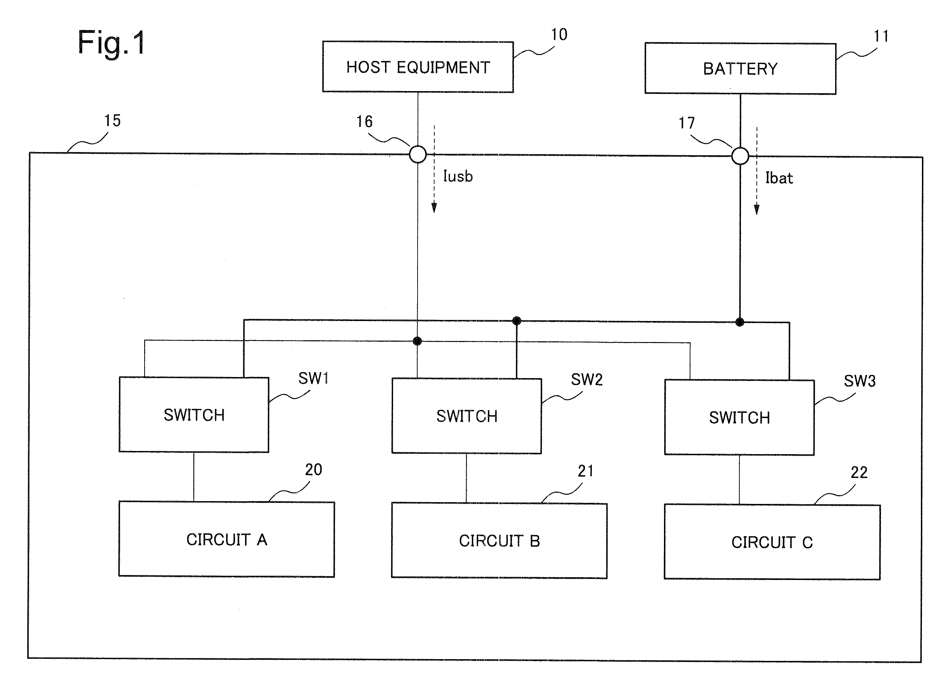

An exemplary configuration of a power supply system according to this exemplary embodiment is shown in Fig. 1. A power supply system according to this exemplary embodiment includes: portable terminal equipment 15 according to this exemplary embodiment, host equipment 10 including a USB and a battery 11. The portable terminal equipment 15 includes a VBUS terminal 16, and power supply from the USB of the host equipment 10 is made possible. The portable terminal equipment 15 includes a battery terminal 17, and power supply from the battery 11 is made possible.

The portable terminal equipment 15 includes a circuit A 20, a circuit B 21, a circuit C 22, a power supply switching switch SW1, a power supply switching switch SW2 and a power supply switching switch SW3. The circuit A 20, the circuit B 21 and the circuit C 22 are, for example, the circuit A 20 of current consumption 100mA, the circuit B 21 of current consumption 400mA and the circuit C 22 of current consumption 400mA. Also, the circuit A 20, the circuit B 21 and the circuit C 22 are separated galvanically each other.

The power supply switching switch SW1 switches power supply to the circuit A 20 between power supply from the USB included in the host equipment 10 and power supply from the battery 11. The power supply switching switch SW2 switches power supply to the circuit B 21 between power supply from the USB included in the host equipment 10 and power supply from the battery 11. The power supply switching switch SW3 switches power supply to the circuit C 22 between power supply from the USB included in the host equipment 10 and power supply from the battery 11.

The power supply switching switches SW1, SW2 and SW3 select among the circuit A 20, the circuit B 21 and the circuit C 22 a circuit operable by electric power which the USB included in the host equipment 10 can supply. In order to perform this selection, the power supply switching switches SW1, SW2 and SW3 may acquire information of the electric power which the USB included in the host equipment 10 can supply. And, the power supply switching switches SW1, SW2 and SW3 supply power from the USB to a circuit which the portable terminal equipment 15 selected and supply power from the battery 11 to a circuit which it did not select.

The power supply switching switches SW1, SW2 and SW3 may select a circuit operable by electric power which the USB included in the host equipment 10 can supply among the circuit A 20, the circuit B 21 and the circuit C 22 based on specifications of the USB. The specifications of USB means, for example, whether the transfer rate of the USB is of Super Speed specifications, of High Speed specifications or of other specifications.

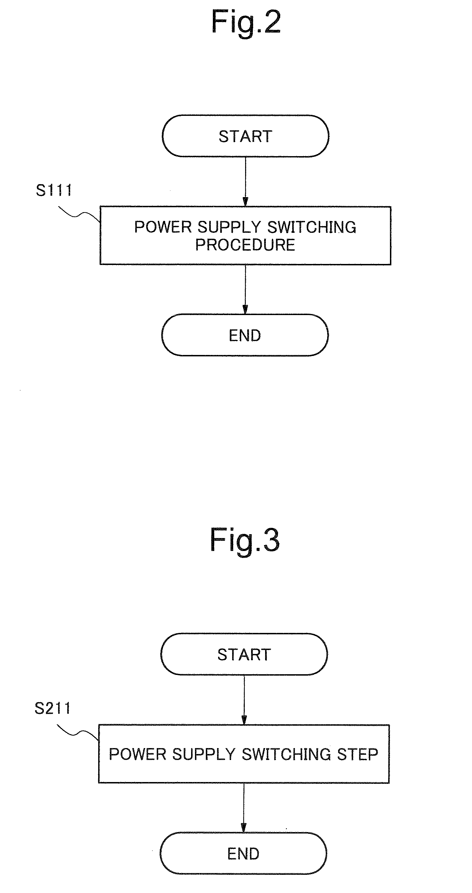

The portable terminal equipment according to this exemplary embodiment may execute a power supply method for portable terminal equipment according to this exemplary embodiment. An example of a power supply method for portable terminal equipment according to this exemplary embodiment is shown in Fig. 2. The power supply method for portable terminal equipment according to this exemplary embodiment includes a power supply switching procedure S111. In the power supply switching procedure S111, power supply for the circuit A 20, the circuit B 21 and the circuit C 22 separated galvanically each other is switched between power supply from the USB included in the host equipment 10 and power supply from the battery 11 for each of the circuit A 20, the circuit B 21 and the circuit C 22.

In the power supply switching procedure S111, the portable terminal equipment 15 acquires information of electric power which the USB can supply, and selects a circuit operable by the electric power which the USB can supply among the circuit A 20, the circuit B 21 and the circuit C 22 based on the information. For example, the portable terminal equipment 15 acquires information of the electric power which can be supplied from the USB, supplies power from the USB to a circuit which is selected, and supplies power from the battery 11 to a circuit which is not selected. For example, in case the USB can supply the electric power with electric current of 100mA, the circuit A 20 is selected. And, power is supplied to the circuit A 20 from the USB, and power is supplied to the circuit B 21 and the circuit C 22 from the battery 11. Also, when the USB can supply the electric power with electric current of 500mA, either of the circuit B 21 and the circuit C 22 is selected. And, power is supplied to either of the circuit B 21 and the circuit C 22 from the USB, and power is supplied to the other and the circuit A 20 from the battery 11.

Selection of a circuit among a plurality of circuits for which the electric power supply from the USB is possible can be performed, for example, as follows. The power supply switching switch acquires information of a transfer rate of the USB and information of the electric power which can be supplied from the USB, and determines whether the transfer rate of the USB is of Super Speed specifications. And, in case determined to be of the Super Speed specifications, whether the electric power which can be supplied from the USB is no smaller than 900mA of current consumption is determined. And, in case determined that the electric power which the USB can supply is no smaller than 900mA of current consumption, the circuit A of 100mA, the circuit B of 400mA and the circuit C of 400mA are selected.

On the other hand, in case determined that the transfer rate of the USB is not of the Super Speed specifications, whether the transfer rate of the USB is of High Speed specifications is determined. And, in case of being of the High Speed specifications, whether the electric power which can be supplied from the USB is no smaller than 500mA of current consumption is determined. In case determined that the electric power which the USB can supply is no smaller than 500mA of current consumption, the circuit A of 100mA and the circuit B or the circuit C of 400mA are selected.

Further, in case determined that the transfer rate of the USB is not of the High Speed specifications, whether the electric power which can be supplied from the USB is no smaller than 100mA of current consumption is determined. In case determined that the electric power which the USB can supply is no smaller than 100mA of current consumption, the circuit A of 100mA is selected.

When connected by the USB, the portable terminal equipment 15 receives from the host equipment 10 only the electric power which can be received from the host equipment 10 and reduces consumption of the electric power from the battery 11 for that amount. As a result, it becomes possible to operate the portable terminal equipment 15 for a long time, and the problems are solved.

Also, the circuit A 20, the circuit B 21 and the circuit C 22 receiving electric power from the host equipment 10 may suspend receiving it from the battery 11. Further, the portable terminal equipment 15 may cut off VBUS and the battery 11, and make the battery 11 not to be charged by the electric power from the VBUS. By doing so, control of the circuit can be simplified. Accordingly, because complicated charge control considering heat generation becomes unnecessary, the development man-hour of portable terminal equipment can be reduced.

Also, on a side of the portable terminal equipment 15, power supply of the circuit A 20, the circuit B 21 and the circuit C 22 may be separated by a circuit size adjusted to the USB specifications. As a result, it becomes possible to receive the electric power from the host equipment to the maximum in line with the standard of the connected USB. Accordingly, for example, in case electric current of 1A is needed on a side of the portable terminal equipment 15, electric power of the present USB standard cannot meet all the electric power of the terminal, as mentioned above, by separating power supply of the circuit A 20, the circuit B 21 and the circuit C 22, it becomes possible for a part of the circuits to receive the electric power from the host equipment.

The portable terminal equipment according to this exemplary embodiment may execute a portable terminal program according to this exemplary embodiment. An example of a portable terminal program according to this exemplary embodiment is shown in Fig. 3. The portable terminal program according to this exemplary embodiment includes a power supply switching step S211. In the power supply switching step S211, power supply for the circuit A 20, the circuit B 21 and the circuit C 22 separated galvanically is switched between power supply from the USB included in the host equipment 10 and power supply from the battery 11 for each of the circuit A 20, the circuit B 21 and the circuit C 22. In the power supply switching step S211, information of electric power which the USB can supply is acquired, and a circuit operable by the electric power which the USB can supply is selected among the circuit A 20, the circuit B 21 and the circuit C 22. And, power is supplied from the USB to the circuit which is selected, and power is supplied from the battery 11 to a circuit which is not selected. As a result, the portable terminal equipment according to this exemplary embodiment can be realized.

Further, the portable terminal equipment according to this exemplary embodiment may be configured to include: a plurality of circuits separated galvanically; and a power supply switching switch which switches power supply to the plurality of circuits between power supply from the USB (Universal Serial Bus) and power supply from the battery for each of the respective circuits included in the plurality of circuits. Even such a structure can solve the problems like the description mentioned above.

### (Exemplary embodiment 2)

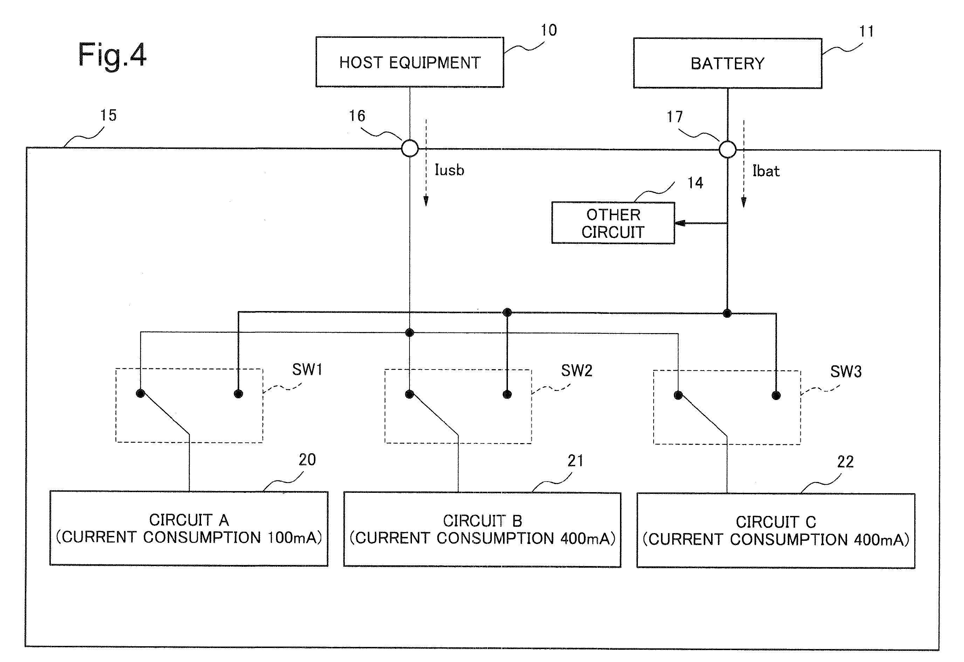

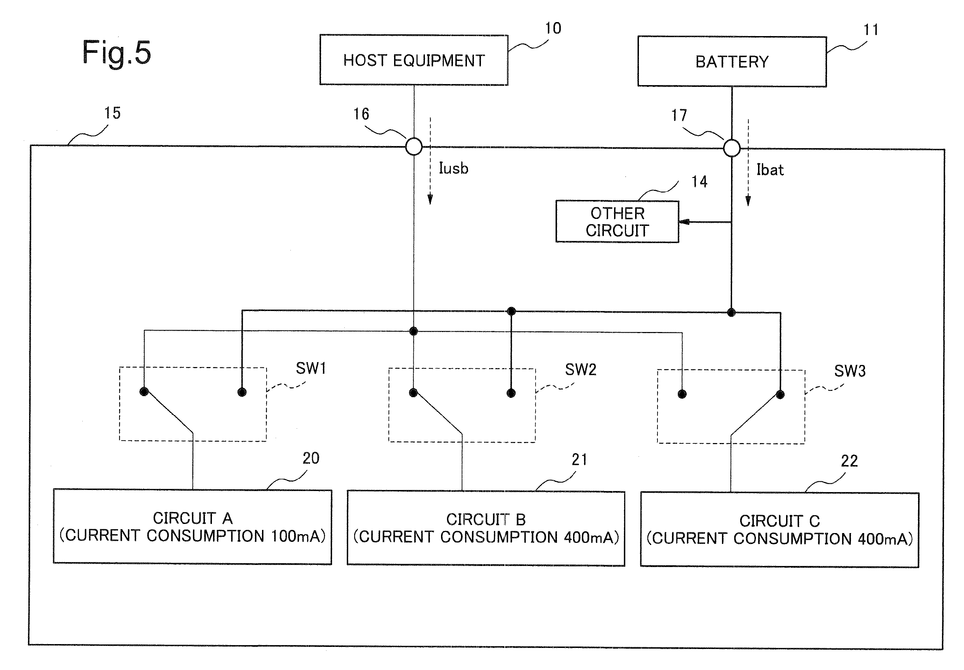

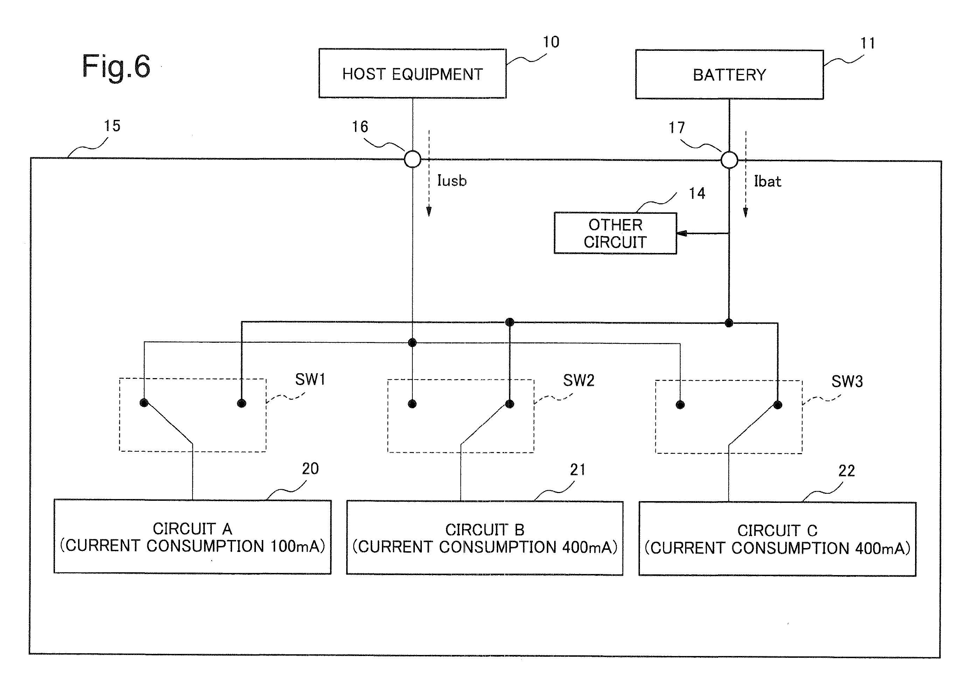

A first example, a second example and a third example of the portable terminal equipment according to this exemplary embodiment are shown in Fig. 4, Fig. 5 and Fig. 6 respectively. The first example, the second example and the third example of the portable terminal equipment are only different in the connection of the power supply switching switches SW1, SW2 and SW3, and their structures are the same. The first example of the portable terminal equipment indicates a case in which supply power of the USB corresponds to 900mA of current consumption. The second example of the portable terminal equipment indicates a case in which supply power of the USB corresponds to 500mA of current consumption. The third example of the portable terminal equipment indicates a case in which supply power of the USB corresponds to 100mA of current consumption.

The portable terminal equipment 15 includes: a VBUS terminal 16 which can receive electric power from the USB included in the host equipment 10, a battery terminal 17 which can receive electric power from the battery 11, the circuit A 20 of which power supply is separated, and power consumption of 100mA of current consumption, the circuit B 21 of which power supply is separated, power consumption of 400mA of current consumption and the circuit C 22 of which power supply is separated, power consumption of 400mA of current consumption. Further, the portable terminal equipment 15 includes: the power supply switching switches SW1, SW2 and SW3 which can select an electric power receiving source of these circuits; and in addition, other circuit 14 which realizes other functions of the portable terminal equipment.

The host equipment 10 is a computer such as a PC which becomes a power supply source of the portable terminal equipment 15. As other circuit 14, although there exist many parts such as CPU, a liquid crystal, a camera and a keyboard of which the portable terminal equipment 15 is composed, their details are omitted.

The power supply switching switch SW1 selects whether to receive power supply of the circuit A 20 from the host equipment 10, or to receive it from the battery 11. The power supply switching switch SW2 selects whether to receive power supply of the circuit B 21 from the host equipment 10 or to receive it from the battery 11. The power supply switching switch SW3 selects whether to receive power supply of the circuit C 22 from the host equipment 10, or to receive it from the battery 11.

The portable terminal equipment 15 receives electric current Ibat from the battery 11 connected to the battery terminal 17 and operates.

The electric current Ibat flows to the power supply switching switch SW1 for the circuit A 20, the power supply switching switch SW2 for the circuit B 21, the power supply switching switch SW3 for the circuit C 22 and other circuit 14. Also, in case the portable terminal equipment 15 and the host equipment 10 are connected via the USB, the portable terminal equipment 15 can receive electric current Iusb from the VBUS terminal 16. The electric current Iusb flows to the power supply switching switch SW1 for the circuit A 20, the power supply switching switch SW2 for the circuit B 21, and the power supply switching switch SW3 for the circuit C 22.

As mentioned above, when the portable terminal equipment 15 and the host equipment 10 are connected via the USB, the portable terminal equipment 15 receives the electric power according to an ability of the host equipment 10. As a result, by the portable terminal equipment 15, it becomes possible to make duration for use of contents during USB connection longer. Although a method is generally known to assign the received electric power from the VBUS to charging of the battery 11 during USB connection, possibilities such as: charge control becomes complicated, and depending on a balance of received electric power from the VBUS and power consumption on the system side, charging becomes insufficient or heat is generated, are considered. In the present invention, there exist characteristics that such restrictions about charging can be evaded, and electric power can be received from the USB efficiently.

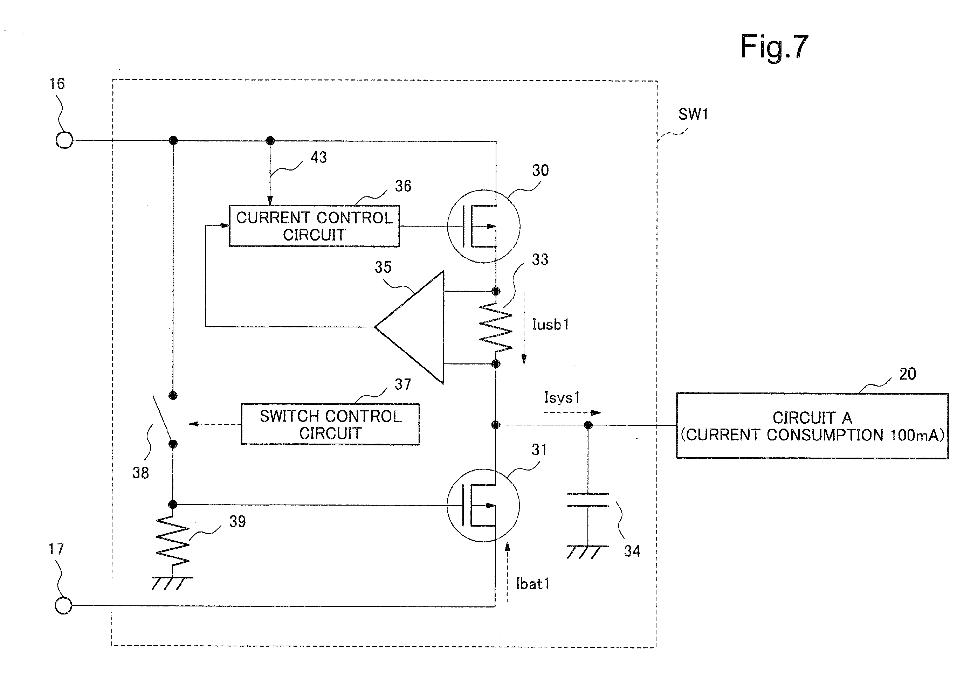

Next, an exemplary configuration of the power supply switching switch will be described using Fig. 7. Because the structure of the power supply switching switch SW2 and the power supply switching switch SW3 are same as the power supply switching switch SW1, their details are omitted.

The power supply switching switch SW1 includes a switch for USB 30 and a switch for battery 31. The switch for USB 30 is connected in series between the VBUS terminal 16 and the circuit A 20. Also, the switch for USB 30 is turned to OFF state when electric potential when electric current is received from the USB is at Low electric potential, and suspends receiving of electric current Iusb1 from the USB by the circuit. On the other hand, when electric potential when electric current is received from the USB is not at Low electric potential, the switch for USB 30 will be turned to ON state, and electric current Iusb1 is received from the USB by the circuit.

Also, the switch for battery 31 is connected in series between the battery terminal 17 and the circuit A 20. The switch for battery 31 is turned to OFF state when the switch for USB 30 is at an ON state, and suspends receiving of electric current Ibat1 from the battery by the circuit. On the other hand, when the switch for USB 30 is at OFF state, the switch for battery 31 will be turned to ON state and supplies electric current Ibat1 from the battery 11 to the circuit A 20. For the switch for USB 30 and the switch for battery 31, for example, FET (Field-Effect Transistor) can be used.

As a circuit on the VBUS side of the power supply switching switch SW1, there exist the switch for USB 30 which restricts received electric current from the VBUS terminal 16, a current control circuit 36 which controls the switch for USB 30, a resistance 33 which measures the electric current Iusb1 received from the VBUS terminal 16, and a voltage detection circuit 35 which takes out electric potential difference of the resistance 33.

Voltage information detected by the voltage detection circuit 35 is sent to the current control circuit 36 and is converted into electric current. The current control circuit 36 adjusts ON resistance of the switch for USB 30 so that no smaller than 100mA of electric current does not flow. When voltage is not applied at the VBUS terminal 16, and Low electric potential is observed at the VBUS terminal 16 (path 43), the switch for USB 30 is controlled to be turned to OFF state by the current control circuit 36.

As a circuit on the battery side, there exists the switch for battery 31 as a switch which decides whether the electric current Ibat1 received from the battery terminal 17 is made to flow to the circuit A 20. The switch for battery 31 is controlled directly by the voltage which is applied to the VBUS terminal 16. The VBUS terminal 16 is connected to the switch for battery 31 via a switch 38.

The switch 38 is turned ON/OFF by a switch control circuit 37. Considering a time when the switch 38 becomes Open, it is necessary for a gate terminal of the switch for battery 31 to be pulled down by a resistance 39.

Although power supply of the circuit A 20 is switched in an instant when a USB cable is pulled out, as a measure for anti-transient power outage at that time, a capacitor for anti-transient power outage 34 is installed. By the capacitor for anti-transient power outage 34, even at the time the USB cable is disconnected, it is structured such that Isys1 which flows to the circuit A 20 can continue to be maintained.

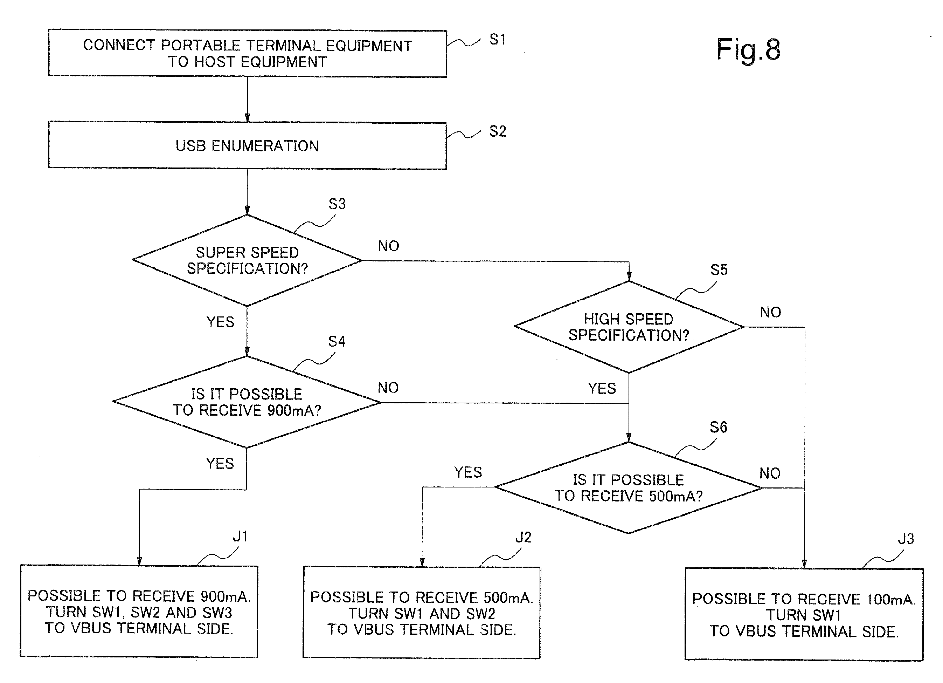

Next, operation after the portable terminal equipment 15 and the host equipment 10 are connected via the USB until selection is made whether the power supply switching switch SW1, the power supply switching switch SW2 and the power supply switching switch SW3 are turned to the VBUS terminal 16 side from the battery terminal 17 side will be explained. An example of operation of the portable terminal equipment according to this exemplary embodiment is shown in Fig. 8.

In a state when the portable terminal equipment 15 is not connected with the host equipment 10 via the USB, the portable terminal equipment 15 receives all electric power from the battery 11. A procedure S1 is executed in this state. In the procedure S1, the portable terminal equipment 15 is connected to the host equipment 10.

Next, a procedure S2 is executed. In the procedure S2, information of a transfer rate of the USB and information of electric power which can be supplied from the USB are acquired. For example, USB enumeration is started. By executing the USB enumeration, the portable terminal equipment 15 can learn: whether the connection with the host equipment 10 is of Super Speed specifications as defined by USB3.0 standard, of High Speed specifications as defined by USB 2.0 standard, or of Full Speed specifications; and also at how many mA of electric current electric power can be received from the host equipment 10.

After the USB enumeration is completed, a procedure S3 is executed. In the procedure S3, it is determined whether the transfer rate of the USB is of the Super Speed specifications.

In the procedure S3, in case it is of the Super Speed specifications, a procedure S4 is executed. In the procedure S4, it is determined whether the electric power which can be supplied from the USB is no smaller than 900mA of current consumption. In case electric power can be received from the host equipment 10 with electric current of 900mA, a procedure J1 is executed. In the procedure J1, all of the power supply switching switch SW1, the power supply switching switch SW2 and the power supply switching switch SW3 are turned to the VBUS terminal 16 side.

In the procedure S3, in case the transfer rate of the USB is not of the Super Speed specifications, a procedure S5 is executed. In the procedure S5, it is distinguished whether it is of the High Speed specifications. In case it is of the High Speed specifications, a procedure S6 is executed. In the procedure S6, it is distinguished whether electric power can be received from the host equipment 10 with electric current of 500mA. In the procedure S6, in case electric power can be received with electric current of 500mA, a procedure J2 is executed. In the procedure J2, the power supply switching switch SW1 and the power supply switching switch SW2 are turned to the VBUS terminal 16 side.

In the procedure S4, in case electric power cannot be received with electric current of 900mA, the procedure S6 is executed.

In the procedure S5, in case it can be distinguished not being of the High Speed specifications, and in the procedure S6, in case it can be distinguished that electric power cannot be received with electric current of 500mA, a procedure J3 is executed. In these cases, the portable terminal equipment 15 can receive from the host equipment 10 only 100mA. Therefore, in the procedure J3, only the power supply switching switch Sow1 is turned to the VBUS terminal 16 side.

Next, operation when a USB cable is pulled out will be described.

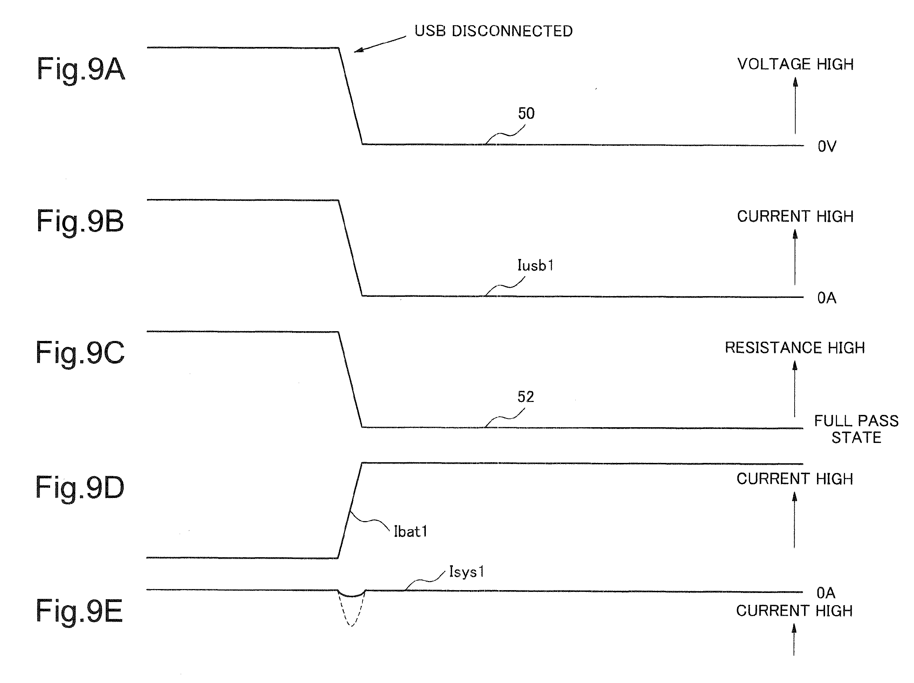

In Fig. 9, (a) indicates time series variation of voltage applied at the VBUS terminal voltage, (b) indicates time series variation of electric current

Iusb1, (c) indicates time series variation of ON resistance of the switch for battery, (d) indicates time series variation of electric current Ibat1, and (e) indicates time series variation of electric current Isys1, when a USB cable is pulled out.

Because USB supports plug and play, a cable may be pulled out at timing when the portable terminal equipment 15 does not intend. In case receiving of electric power from the VBUS is terminated, it becomes necessary to change power supply of all circuits such as the circuit A 20 which received electric power from the VBUS to the battery 11 from the VBUS.

When the USB cable is pulled out, as shown in Fig. 9 (a), voltage 50 applied at the VBUS terminal falls from 5V to 0V. Together with this, as shown in Fig. 9 (b), electric current Iusb1 also falls to 0A. According to this exemplary embodiment, gate voltage of the switch for battery 31 is being controlled by the voltage of the VBUS. In this case, when the voltage of the VBUS falls, as shown in Fig. 9 (c), ON resistance 52 of the switch for battery 31 becomes small. Here, ON state means that it is in full pass state. For this reason, the switch for battery 31 will become ON state.

When the switch for battery 31 becomes ON state, as it becomes possible to receive from the battery terminal 17, electric current Ibat1 starts to flow into Isys1 as shown in Fig. 9 (d). However, during a time after the VBUS is cut off until ON resistance of the switch for battery 31 becomes ON state, there is a possibility that Isys1 may be cut off as shown by a broken line in Fig. 9 (e). Accordingly, in this exemplary embodiment, by installing the capacitor for anti-transient power outage 34, as shown by a solid line in Fig. 9 (e), it is devised so that Isys1 is not cut off even just after the VBUS is cut off.

Further, as shown by the solid line in Fig. 9 (e), even if the capacitor for anti-transient power outage 34 is installed, Isys1 declines for a moment just after the VBUS is cut off. When capacity of the capacitor for anti-transient power outage 34 is small, Isys 1 falls greatly at that time, and may affect the other circuit 14. Accordingly, it is desirable that the capacitor for anti-transient power outage 34 has large capacity.

By structuring as above, the portable terminal equipment according to this exemplary embodiment can switch power supply from the VBUS to the battery at the same time as the USB is cut off. As a result, it is also possible to correspond to plug and play.

A first effect by the portable terminal equipment according to this exemplary embodiment is: when being used in a state that the portable terminal equipment 15 and the host equipment 10 are connected, by receiving electric power only as much as receivable from the VBUS, a continuous use time of contents during USB connection can be extended. A second effect is: compared with USB charging, with an easy structure of software and hardware, it becomes possible to receive electric power from the USB. A third effect is: even when received electric power from the USB falls below the whole power consumption of the portable terminal equipment 15, it is possible to receive electric power of the USB efficiently.

It is without mentioning that: the present invention is not limited to the exemplary embodiments mentioned above; various transformations are possible within the scope of the invention described in the claims; and they are also included in the scope of the present invention.

This application claims priority based on Japanese Patent Application No. 2009-234112 filed on October 8, 2009 and the disclosure thereof is incorporated herein in its entirety.

### Industrial applicability

Because the present invention can be applied to portable terminal equipment with a USB port such as a portable computer, a PDA (Personal Digital Assistant), a portable Book terminal and a mobile phone, it can be utilized in an information and communications industry.

### Reference Signs List

- 10: Host equipment
- 11: Battery
- 14: Other circuit
- 15: Portable terminal equipment
- 16: VBUS terminal
- 17: Battery terminal
- 20: Circuit A
- 21: Circuit B
- 22: Circuit C
- 30: Switch for USB
- 31: Switch for battery
- 33, 39: Resistance
- 34: Capacitor for anti-transient power outage
- 35: Voltage detection circuit
- 36: Current control circuit
- 37: Switch control circuit
- 38: Switch
- 43: Path

## Claims

1. Portable terminal equipment comprising: a plurality of circuits separated galvanically; and
a power supply switching switch which switches power supply to said plurality of circuits between power supply from a USB (Universal Serial Bus) and power supply from a battery for each of respective circuits included in said plurality of circuits.

2. The portable terminal equipment according to claim 1, wherein said power supply switching switch selects, among said plurality of circuits, a circuit operable by electric power which can be supplied from said USB, supplies power from said USB to the circuit which is selected, and supplies power from said battery to a circuit which is not selected.

3. The portable terminal equipment according to claim 2, wherein said power supply switching switch selects the circuit operable by the electric power which can be supplied from said USB based on whether a transfer rate of said USB is: of Super Speed specifications, of High Speed specifications or of other specifications.

4. The portable terminal equipment according to either one of claims 1 to 3, wherein said plurality of circuits is a circuit of current consumption 100mA and two circuits of current consumption 400mA; and
said power supply switching switch determines whether the transfer rate of said USB is of the Super Speed specifications; in case determined that said transfer rate is of said Super Speed specifications, determines whether the electric power which can be supplied from said USB is no smaller than 900mA of current consumption;
in case determined that said transfer rate is not of said Super Speed specifications, determines whether said transfer rate is of the High Speed specifications; in case determined that said transfer rate is of said High Speed specifications, determines whether the electric power which can be supplied from said USB is no smaller than 500mA of current consumption;
in case determined that the transfer rate of said USB is neither of said Super Speed specifications nor of said High Speed specifications, by determining whether the electric power which can be supplied from said USB is no smaller than 100mA of current consumption, selects a circuit among said plurality of circuits operable by the electric power which can be supplied from said USB; and
supplies power from said USB to the circuit which is selected and supplies power from said battery to a circuit which is not selected.

5. The portable terminal equipment according to claim 4, wherein said power supply switching switch, in case the electric power which said USB can supply is no smaller than 900mA of current consumption, selects said circuit of 100mA and two of said circuit of 400mA;
in case the electric power which said USB can supply is no smaller than 500mA and less than 900mA of current consumption, selects said circuit of 100mA and one of said circuit of 400mA; and
in case the electric power which said USB can supply is no smaller than 100mA and less than 500mA of current consumption, selects the circuit of 100mA.

6. The portable terminal equipment according to either one of claims 1 to 5, wherein said power supply switching switch further comprises: a switch for USB which is connected in series between said USB and a circuit included in said plurality of circuits; and a switch for battery which is connected in series between said battery and said circuit; wherein
said switch for USB is turned to OFF state when electric potential when electric current is received from said USB is at Low electric potential, and suspends supply of electric current from said USB to said circuit; and is turned to ON state when electric potential when electric current is received from said USB is not at Low electric potential, and supplies electric current from said USB to said circuit; and
said switch for battery suspends to supply electric current from said battery to said circuit when said switch for USB is at said ON state; and supplies electric current from said battery to said circuit when said switch for USB is at the OFF state.

7. A power supply system comprising: portable terminal equipment described in either of claims 1 to 6;
host equipment including said USB; and
said battery.

8. The power supply system according to claim 7, wherein said battery will not be charged by power supply from said USB.

9. A power supply method to portable terminal equipment comprising:
a power supply switching procedure which switches power supply to a plurality of circuits separated galvanically between power supply from a USB (Universal Serial Bus) and power supply from a battery for each of respective circuits included in said plurality of circuits.

10. The power supply method to portable terminal equipment according to claim 9, wherein in said power supply switching procedure, selecting, among said plurality of circuits, a circuit operable by electric power which can be supplied from said USB, supplying power from said USB to the circuit which is selected, and supplying power from said battery to a circuit which is not selected.

11. The power supply method to portable terminal equipment according to claim 10, wherein in said power supply switching procedure, selecting the circuit operable by the electric power which can be supplied from said USB based on whether a transfer rate of said USB is: of Super Speed specifications, of High Speed specifications or of other specifications.

12. The power supply method to portable terminal equipment according to either one of claims 9 to 11, wherein said plurality of circuits is a circuit of current consumption 100mA and two circuits of current consumption 400mA; and
in said power supply switching procedure, determining whether the transfer rate of said USB is of the Super Speed specifications; in case determined that said transfer rate is of said Super Speed specifications, determining whether the electric power which can be supplied from said USB is no smaller than 900mA of current consumption;
in case determined that said transfer rate is not of said Super Speed specifications, determining whether said transfer rate is of the High Speed specifications; in case determined that said transfer rate is of said High Speed specifications, determining whether the electric power which can be supplied from said USB is no smaller than 500mA of current consumption;
in case determined that the transfer rate of said USB is neither of said Super Speed specifications nor of said High Speed specifications, by determining whether the electric power which can be supplied from said USB is no smaller than 100mA of current consumption, determining and selecting a circuit among said plurality of circuits operable by the electric power which can be supplied from said USB; and
supplying power from said USB to the circuit which is selected and supplying power from said battery to a circuit which is not selected.

13. A power supply method to portable terminal equipment according to claim 12, wherein in said power supply switching procedure, in case the electric power which said USB can supply is no smaller than 900mA of current consumption, selecting said circuit of 100mA and two of said circuit of 400mA;
in case the electric power which said USB can supply is no smaller than 500mA and less than 900mA of current consumption, selecting said circuit of 100mA and one of said circuit of 400mA; and
in case the electric power which said USB can supply is no smaller than 100mA and less than 500mA of current consumption, selecting the circuit of 100mA.

14. A power supply program to portable terminal equipment which makes a computer execute a power supply switching step which switches power supply to a plurality of circuits separated galvanically between power supply from a USB (Universal Serial Bus) and power supply from a battery for each of respective circuits included in said plurality of circuits

15. The power supply program to portable terminal equipment according to claim 14, wherein in said power supply switching step, determining and selecting, among said plurality of circuits, a circuit operable by electric power which can be supplied from said USB, supplying power from said USB to the circuit which is selected, and supplying power from said battery to a circuit which is not selected.

16. The power supply program to portable terminal equipment according to claim 15, wherein in said power supply switching step, selecting the circuit operable by the electric power which can be supplied from said USB based on whether a transfer rate of said USB is: of Super Speed specifications, of High Speed specifications or of other specifications.

17. The power supply program to portable terminal equipment according to either one of claims 14 to 16, wherein said plurality of circuits is a circuit of current consumption 100mA and two circuits of current consumption 400mA; and
in said power supply switching step, determining whether the transfer rate of said USB is of the Super Speed specifications; in case determined that said transfer rate is of said Super Speed specifications, determining whether the electric power which can be supplied from said USB is no smaller than 900mA of current consumption;
in case determined that said transfer rate is not of said Super Speed specifications, determining whether said transfer rate is of the High Speed specifications; in case determined that said transfer rate is of the High Speed specifications, determining whether the electric power which can be supplied from said USB is no smaller than 500mA of current consumption;
in case determined that the transfer rate of said USB is neither of said Super Speed specifications nor of said High Speed specifications, by determining whether the electric power which can be supplied from said USB is no smaller than 100mA of current consumption, determining and selecting a circuit among said plurality of circuits operable by the electric power which can be supplied from said USB; and
supplying power from said USB to the circuit which is selected and supplying power from said battery to a circuit which is not selected.

18. The power supply program to portable terminal equipment according to claim 17, wherein in said power supply switching step, in case the electric power which said USB can supply is no smaller than 900mA of current consumption, selecting said circuit of 100mA and two of said circuit of 400mA;
in case the electric power which said USB can supply is no smaller than 500mA and less than 900mA of current consumption, selecting said circuit of 100mA and one of said circuit of 400mA; and
in case the electric power which said USB can supply is no smaller than 100mA and less than 500mA of current consumption, selecting the circuit of 100mA.
